# FASCICULE DE BREVET EUROPEEN

(11) **EP 2 995 379 B1**
(45) Date de publication et mention de la délivrance du brevet: **01.07.2020**
(21) Numéro de dépôt: 15181922.4
(22) Date de dépôt: 21.08.2015
(51) Int. Cl.: B01J 38/22, B01J 8/12, C10G 35/10

(54) **RÉGÉNÉRATEUR APTE À RÉGÉNÉRER DES CATALYSEURS DANS DES CONDITIONS OPÉRATOIRES DIFFÉRENTES**
REGENERATOR, DER IN DER LAGE IST, KATALYSATOREN UNTER UNTERSCHIEDLICHEN BETRIEBSBEDINGUNGEN ZU REGENERIEREN
REGENERATOR CAPABLE OF REGENERATING CATALYSTS UNDER VARIOUS OPERATING CONDITIONS

(30) Priorité: 10.09.2014 FR 1458504
(43) Date de publication de la demande: 16.03.2016
(73) Titulaire: IFP Energies nouvelles, 92500 Rueil-Malmaison (FR)
(72) Inventeur: BAZER-BACHI, Frederic, 69540 Irigny (FR); LEMAIRE, Eric, 69480 Anse (FR); LAMBERT, Fabian, 78400 Chatou (FR)
(74) Mandataire: IFP Energies nouvelles

(56) Documents cités:
- EP-A1- 0 872 277
- FR-A1- 2 992 873
- FR-A1- 2 995 798

## Description

La présente invention concerne le domaine de la conversion d'hydrocarbures et plus particulièrement celui du reformage catalytique. L'invention a pour objet un réacteur de régénération (ou régénérateur) de catalyseurs, une unité de reformage catalytique mettant en œuvre un régénérateur selon l'invention et également un procédé de reformage catalytique.

### Etat de la technique

La réformation (ou reformage catalytique) de coupes hydrocarbonées du type naphta est bien connue dans le domaine du raffinage. Cette réaction permet de produire à partir de ces coupes hydrocarbonées des bases pour carburant à haut indice d'octane et/ou des coupes aromatiques pour la pétrochimie, tout en fournissant à la raffinerie l'hydrogène nécessaire pour d'autres opérations.

Le procédé de reformage catalytique consiste à mettre en contact la coupe d'hydrocarbures contenant des composés paraffiniques et des naphtènes avec de l'hydrogène et un catalyseur de reformage, par exemple au platine, et à convertir les composés paraffiniques et les naphtènes en composés aromatiques avec une production associée d'hydrogène. Etant donné que les réactions mises en jeu dans le procédé de reformage (réactions d'isomérisation, de déshydrogénation et de déshydrocyclisation) sont endothermiques, il convient de chauffer l'effluent soutiré d'un réacteur avant de l'envoyer dans le réacteur suivant.

Au cours du temps, le catalyseur de reformage se désactive en raison du dépôt de coke sur ses sites actifs. Par conséquent il est nécessaire, afin de maintenir une productivité acceptable de l'unité de reformage, de régénérer le catalyseur afin d'éliminer le dépôt et ainsi rétablir son activité.

Il existe divers types de procédés de reformage. Le premier type concerne des procédés dits "non régénératif", le catalyseur reste en service pendant de longues périodes mais son activité baisse au cours du temps ce qui oblige à élever la température des réacteurs progressivement donc à avoir une sélectivité variable au cours du cycle opératoire. Les réacteurs sont nécessairement tous mis hors-circuit, ce qui interrompt totalement la production de la raffinerie, afin de régénérer le catalyseur avant un cycle de production. Selon un autre procédé de reformage catalytique dit "semi-régénératif", le catalyseur est régénéré fréquemment dans le cas où l'on utilise plusieurs réacteurs qui renferment le catalyseur en lit fixe. L'un des réacteurs est en régénération pendant que les autres réacteurs sont en service; il remplace ensuite un des réacteurs en service lorsque le catalyseur de celui-ci doit être régénéré, et de cette façon, tous les réacteurs sont alternativement mis hors service pour régénération, puis, à nouveau, en service sans que la marche de l'unité ne soit interrompue.

Enfin il existe le procédé de reformage dit "en régénération continue du catalyseur" (CCR, Continuous Catalytic Reforming selon la terminologie anglo-saxonne) qui implique que la réaction est conduite dans un réacteur dans lequel le catalyseur s'écoule continuellement de haut en bas et la régénération se fait en continu dans un réacteur annexe, le catalyseur étant recyclé dans le réacteur principal de manière à ne pas interrompre la réaction. On pourra se référer au document FR 2160269 qui divulgue un procédé de reformage catalytique avec régénération continu du catalyseur mettant en jeu plusieurs réacteurs à lits radiaux mobiles en série et un régénérateur dédié. Selon le procédé FR 2160269, la coupe d'hydrocarbures en mélange avec de l'hydrogène est traitée successivement dans chacun des réacteurs en série tandis que le catalyseur transite en continu dans tous les réacteurs. Le catalyseur récupéré en sortie du réacteur final est envoyé en régénération dans le régénérateur à la sortie duquel le catalyseur régénéré est réintroduit progressivement dans le premier réacteur de reformage. Le document US 7,985,381 décrit en détail un réacteur de régénération de catalyseur de reformage comportant une zone de combustion, une zone d'oxychloration, et une zone de calcination. Le catalyseur circule selon une direction verticale descendante dans le régénérateur. Il passe de la zone d'oxychloration à la zone de calcination via une couronne annulaire. Un gaz de calcination injecté en fond de la zone de calcination traverse à contre-courant le lit de catalyseur dans la zone de calcination puis est récupéré dans une seconde zone annulaire située en périphérie du réacteur. Dans cette seconde zone annulaire, le gaz d'oxychloration est injecté pour être mélangé avec le gaz de calcination qui a été récupéré de sorte que le mélange traverse ensuite cette zone d'oxychloration. D'autres solutions technologiques existent afin d'injecter le gaz d'oxychloration dans le réacteur autrement que par l'intermédiaire de baffles externes ou d'un distributeur multipoints parmi lesquelles on peut citer la solution de type plateau décrite dans le document FR2992874 et la solution du type caisson de mélange divulguée dans le document FR2993794.

Les procédés de reformage de l'art antérieur mettent généralement en œuvre un seul type de catalyseur pour réaliser la conversion en aromatiques. Or, suivant l'avancement de la réaction de reformage, les réactions prépondérantes ne sont pas les mêmes; les réactions de déshydrogénation des naphtènes en aromatiques ont plutôt lieu dans les premières zones réactionnelles alors que les réactions de déshydrocyclisation des paraffines en aromatiques et d'hydrocraquage ont lieu principalement dans les dernières zones réactionnelles. En parallèle, la quantité de coke à la surface du catalyseur augmente majoritairement dans les dernières zones réactionnelles engendrant une désactivation plus importante du catalyseur qui travaille dans les dernières zones réactionnelles.

Il est par ailleurs connu du brevet FR 2 995 798 un réacteur permettant la régénération en continu de grains de catalyseur, et qui est compose d'une enceinte comportant une zone d'oxychloration superposée a une zone de calcination munie d'un conduit d'introduction de gaz de calcination, le réacteur comportant un conduit d'injection de gaz d'oxychloration débouchant en fond de la zone d'oxychloration et un conduit d'évacuation de gaz en tête de la zone d'oxychloration, et tel que la zone d'oxychloration comporte au moins un moyen déflecteur pour dévier l'écoulement des grains de catalyseur.

Il est également connu du brevet FR 2 992 873 un réacteur permettant la régénération en continu du catalyseur, et qui est compose d'une enceinte comportant une zone d'oxychloration superposée a une zone de calcination munie d'un conduit d'introduction de gaz de calcination et d'un conduit d'injection de gaz d'oxychloration. Une boite de mélange est disposée entre la zone d'oxychloration et la zone de calcination, au moins un espace de passage de grains de catalyseur étant ménagé entre la boite et l'enceinte, la boite de mélange comportant un espace interne 80 entoure par une paroi latérale étanche au gaz, un fond perméable au gaz et un toit 81 recouvrant l'espace interne. Le conduit d'introduction de gaz d'oxychloration débouche dans l'espace interne. La boite de mélange comporte des moyens d'évacuation de gaz, ces moyens étant disposés entre ladite paroi verticale et le toit.

Il apparaît ainsi que les procédés de reformage "en régénération continue de catalyseur" sont perfectibles en termes d'efficacité et donc du point de vue du rendement de la conversion.

### Résumé de l'invention

Un but de l'invention est de fournir un régénérateur apte à traiter simultanément et séparément dans des conditions opératoires différentes les catalyseurs de reformage en fonction de leur degré de désactivation, notamment en fonction de leur degré de cokage. Le régénérateur selon l'invention peut être également mis en œuvre dans une unité de reformage catalytique à régénération continue de catalyseur employant au moins deux types de catalyseurs différents qui sont adaptés pour réaliser des réactions catalytiques spécifiques en fonction de l'avancement de la conversion.
Ainsi la présente invention concerne un régénérateur de catalyseur en lit mobile, pour régénérer simultanément et séparément des catalyseurs dans des conditions opératoires différentes, comprenant une enceinte s'étendant selon une direction verticale, ladite enceinte étant divisée en au moins deux zones de régénération s'étendant le long de la hauteur verticale de ladite enceinte dans lesquelles circulent de façon gravitaire des particules de catalyseur, dans lequel chaque zone de régénération comprend successivement et dans l'ordre de circulation des catalyseurs:
- une section de combustion (CO);
- une section d'oxychloration (O) disposée sous la section de combustion et comportant des moyens d'amenée du catalyseur de la section de combustion (CO) dans la section d'oxychloration (O);
- une section de calcination (CA) disposée sous la section d'oxychloration.
Les zones de régénération sont séparées les unes des autres par un moyen de séparation étanche aux catalyseurs et au gaz de sorte que, dans ledit réacteur, les catalyseurs de chacune des zones soient aptes à être régénérés dans des conditions opératoires différentes.

Le régénérateur selon l'invention permet ainsi de traiter les catalyseurs dans des conditions opératoires spécifiques, par exemple avec des vitesses d'écoulement du catalyseur différentes ou des débits de gaz réactif différents ou de températures différentes, encore avec des compositions de gaz différents, en fonction de leur taux de désactivation et en particulier en fonction du taux de cokage.

Le régénérateur selon l'invention peut être décliné de manière à comprendre plus de deux zones de régénération.

Selon un mode de réalisation, chacune des sections de combustion comprend un espace annulaire délimité par deux tamis perméables au gaz et étanches aux catalyseurs dans lequel circule de manière gravitaire le catalyseur.
Alternativement, chacune des sections de combustion est formée par une portion d'un espace annulaire, l'espace annulaire étant délimité par deux tamis perméables au gaz et étanches aux catalyseurs et divisé en portions par des moyens de séparation étanches aux catalyseurs et au gaz. Par exemple les tamis sont choisis parmi une grille et une plaque perforée.

Selon un mode de réalisation préféré, chaque section d'oxychloration est obtenue par la partition d'une zone de l'enceinte en compartiment par un moyen de séparation étanche aux catalyseurs et au gaz.

De préférence, chaque section de calcination est obtenue par la partition d'une zone de l'enceinte en compartiment par un moyen de séparation étanche aux catalyseurs et au gaz.

Selon un mode de réalisation avantageux, la section d'oxychloration est séparée de la section de calcination par une section de mélange configurée pour réaliser le mélange d'un gaz d'oxychloration avec un gaz de calcination.

Un autre but de l'invention est de proposer une unité de reformage catalytique et un procédé de reformage qui sont optimisés tant du point de vue de l'utilisation des catalyseurs que des coûts de mise en œuvre.
Ainsi l'invention a pour objet une unité de reformage catalytique à régénération continue de catalyseur comprenant :
- au moins une première zone réactionnelle et au moins une seconde zone réactionnelle, les première et seconde zones réactionnelles contenant respectivement au moins un premier lit mobile de catalyseur et au moins un second lit mobile de catalyseur;
- un régénérateur apte à régénérer simultanément et séparément les catalyseurs des zones réactionnelles dans des conditions opératoires différentes;
- des moyens de transfert de l'effluent issu de la première zone réactionnelle dans la seconde zone réactionnelle;
- des moyens d'amenée du catalyseur de la première zone réactionnelle dans le régénérateur;
- des moyens d'amenée du catalyseur de la seconde zone réactionnelle dans le régénérateur;
- des moyens de transfert du catalyseur régénéré depuis le régénérateur dans la première zone réactionnelle;
- des moyens de transfert du catalyseur régénéré depuis le régénérateur dans la seconde zone réactionnelle.

Selon un mode de réalisation, les première et seconde zones réactionnelles sont disposées en empilement vertical dans un réacteur.

Alternativement, les première et seconde zones réactionnelles sont disposées respectivement dans au moins un premier réacteur et au moins un second réacteur qui sont agencés côte-à-côte.

Selon un mode de réalisation, le catalyseur de la première zone réactionnelle est de composition différente de celle du catalyseur de la seconde zone réactionnelle.

De manière préférée, les lits mobiles de catalyseur des première et seconde zones réactionnelles sont contenus dans un espace annulaire délimité par deux grilles cylindriques espacées, lesdites grilles étant perméables aux gaz et étanches aux catalyseurs.

L'invention concerne également un procédé de reformage catalytique d'une charge d'hydrocarbures comprenant les étapes suivantes:
a) on traite la charge d'hydrocarbures en présence d'hydrogène dans au moins une première zone réactionnelle comportant au moins un lit mobile de catalyseur;
b) on soutire en continu et séparément un effluent et le catalyseur de la première zone réactionnelle;
c) on traite l'effluent issu de la première zone réactionnelle en présence d'hydrogène dans au moins une seconde zone réactionnelle comportant au moins un lit mobile de catalyseur;
d) on soutire en continu et séparément un reformat et le catalyseur de la seconde zone réactionnelle;
e) on envoie les catalyseurs des première et seconde zones réactionnelles dans un régénérateur selon l'invention et on régénère dans des conditions opératoires différentes lesdits catalyseurs;
f) on renvoie séparément les catalyseurs régénérés dans les première et seconde zones réactionnelles respectives.

Selon l'invention, le catalyseur de la première zone réactionnelle peut être de composition différente ou identique à celle du catalyseur de la seconde zone réactionnelle. On entend par le terme "composition" les éléments qui constituent le catalyseur à savoir, le support et la phase métallique active.

De préférence, l'écoulement de la charge, des effluents, des premier et second catalyseurs dans les lits mobiles se font à co-courant selon une direction descendante. De préférence, les lits mobiles sont du type "radial".

Selon un mode de réalisation, les première et seconde zones réactionnelles sont disposées dans une configuration verticale dans un réacteur avec la première zone réactionnelle qui est située au-dessus de la seconde zone réactionnelle.
Alternativement, les première et seconde zones réactionnelles sont disposées côte-à-côte respectivement dans au moins un premier réacteur et au moins un second réacteur.

Dans le cadre de l'invention, le procédé peut comprendre plus de deux sections réactionnelles qui opèrent chacune avec des catalyseurs de composition différente. Par exemple le procédé peut mettre en œuvre trois ou quatre sections réactionnelles en série.
Il est bien entendu possible d'employer un ou plusieurs lits mobiles de catalyseur par section réactionnelle.

### Description détaillée de l'invention

D'autres caractéristiques et avantages de l'invention seront mieux compris à la lecture de la description faite ci-après en référence aux dessins parmi lesquels:
La figure 1 représente une vue en coupe selon un plan vertical d'un régénérateur de catalyseur selon l'invention;
La figure 2 est une vue coupe selon un plan perpendiculaire à l'axe vertical du régénérateur de la figure 1 dans la zone de combustion;
La figure 3 est une vue coupe selon un plan perpendiculaire à l'axe vertical d'un régénérateur selon une autre forme de réalisation dans la zone de combustion;
La figure 4 est une vue coupe selon un plan perpendiculaire à l'axe vertical d'un régénérateur dans la zone de combustion selon un mode de réalisation alternatif;
La figure 5 est une vue en perspective des zones d'oxychloration et de calcination d'un régénérateur selon l'invention;
La figure 6 est un schéma de principe simplifié du procédé selon l'invention.

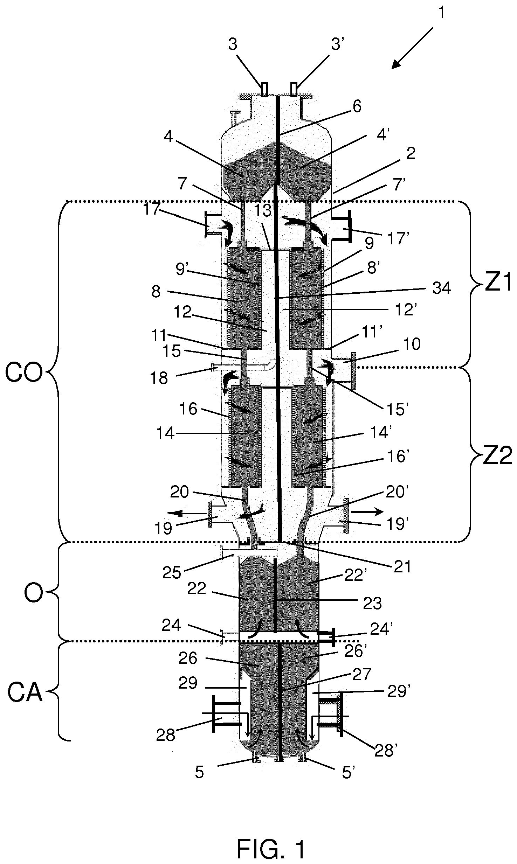

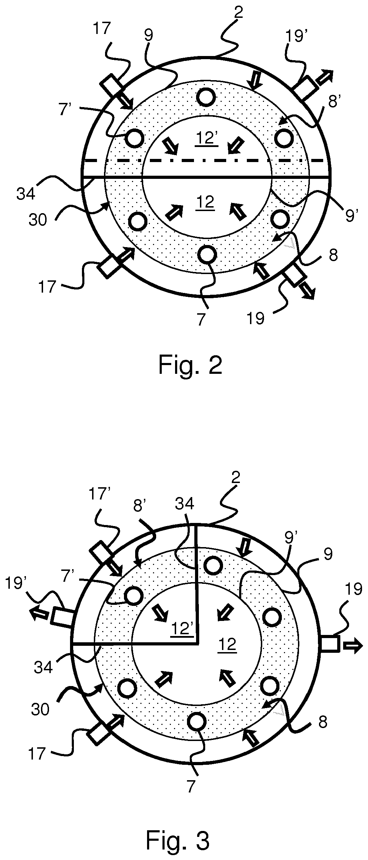

Sur la figure 1, le réacteur de régénération (ou régénérateur) de catalyseur est composé d'une enceinte 2 de forme essentiellement cylindrique, renfermant des sections de combustion CO, des sections d'oxychloration O et des sections de calcination CA. L'enceinte peut être en forme de cylindre d'axe vertical, le cylindre étant fermé à ses extrémités. Les sections de combustion CO, d'oxychloration O et de calcination CA sont superposées dans le réacteur 1. Dans le réacteur 1, ces sections peuvent être de même diamètre ou de diamètres différents. Dans la figure 1, le régénérateur 1 comprend deux zones de régénération s'étendant selon l'axe vertical depuis le sommet jusqu'au fond du réacteur qui sont configurées pour régénérer les catalyseurs de reformage dans des conditions opératoires différentes et de manière simultanée. Les catalyseurs à régénérer sont introduits en tête du réacteur 1 par un ou plusieurs conduits 3 et 3' communiquant respectivement dans les réservoirs 4 et 4' de sorte que les catalyseurs contenus dans lesdits réservoirs ne soient pas mélangés à l'intérieur du régénérateur. Les catalyseurs après passage dans la section de régénération sont évacués du réacteur 1 par les conduits 5 et 5' situés en fond du réacteur 1. Sous l'effet de la gravité, les catalyseurs circulent de haut en bas dans le réacteur en traversant la zone de régénération qui comprend successivement les sections de combustion CO, d'oxychloration O et de calcination CA. Les catalyseurs sont sous forme de grain solide, par exemple sous forme de bille ayant entre 0,5 et 20 mm de diamètre afin de faciliter leur circulation dans le réacteur 1. Les grains de catalyseur sont composés d'un support poreux, par exemple une alumine, sur lequel a été déposé différents composés, notamment du platine et du chlore, et éventuellement de l'étain, du rhénium, de l'indium et/ou du phosphore. Les catalyseurs à régénérer circulant dans chaque zone de régénération présentent généralement un taux de cokage différent.
Les catalyseurs introduits respectivement par les conduits 3 et 3' dans le réacteur 1 arrivent dans des réservoirs 4 et 4' qui permettent d'alimenter en catalyseurs les sections de combustion CO du régénérateur. Les réservoirs 4 et 4' sont séparés l'un de l'autre par un moyen de séparation 6 étanche aux catalyseurs et au gaz, par exemple une plaque métallique.
Dans l'exemple de la figure 1, le régénérateur contient pour chaque zone de régénération une section de combustion CO permettant de réaliser la combustion du coke déposé sur les catalyseurs. Une section de combustion CO peut comporter un ou plusieurs étages. Le réacteur 1 de la figure 1 comporte deux étages Z1 et Z2 de conception identique. Selon un mode de réalisation particulier, la section de combustion CO peut comporter en outre une zone de contrôle de combustion, par exemple telle que décrite par le document FR 2761907. Comme représenté sur la figure 1, les deux catalyseurs contenus dans les réservoirs 4,4' s'écoulent de manière gravitaire dans les sections de combustion CO respectives au moyen d'une ou plusieurs jambes de transfert 7 et 7'. Dans le mode de réalisation de la figure 1, les catalyseurs sont introduits et confinés respectivement dans des zones de combustion 8 et 8' de l'étage Z1. Les zones 8, 8', de forme semi-annulaire, sont délimitées par deux tamis de forme cylindrique perméables au gaz 9, 9' et étanches aux catalyseurs. Par exemple les tamis 9 et 9' peuvent prendre la forme d'une grille ou d'une plaque perforée. La grille peut être une grille du type Johnson bien connue de l'homme du métier. Il est à noter que la forme des zones 8, 8' n'est pas nécessairement semi-circulaire, elle peut être en U.
En référence à la figure 2 qui représente une vue en coupe selon un plan perpendiculaire à l'axe vertical du régénérateur à écoulement gravitaire de catalyseurs de la figure 1, au niveau de la section de combustion CO, on observe que l'espace annulaire 30, commun aux sections de combustion, est délimité par les deux tamis 9 et 9' perméables au gaz et étanches aux catalyseurs. Les tamis 9 et 9' sont disposés de manière concentrique. L'espace annulaire 30 est en outre divisé en deux zones (ou compartiments) semi-annulaires 8 et 8' dont les volumes sont sensiblement égaux, par un moyen de séparation 34 étanche aux catalyseurs et au gaz. Le moyen de séparation 34 qui s'étend sur toute la hauteur de l'espace annulaire 30 peut être par exemple une plaque pleine. Les zones (ou compartiments) semi-annulaires 8 et 8' sont conçues pour contenir respectivement des catalyseurs sans qu'il y ait de mélange entre les catalyseurs. Comme indiqué sur la figure 2, les zones (ou compartiments) semi-annulaires 8 et 8' sont respectivement connectées à au moins un conduit d'alimentation 7 et 7' permettant l'introduction des catalyseurs dans chacune desdites zones (ou compartiments). Les espaces centraux 12 et 12', situés entre le moyen de séparation 34 et le tamis intérieur 9', sont des espaces de collecte du gaz de combustion.
Comme visible sur la figure 2, le moyen de séparation 34 est solidaire de l'enceinte 2. Ce mode de réalisation est avantageux lorsque l'on met en œuvre deux gaz de combustion de composition différente qui sont spécifiques pour traiter les catalyseurs contenus dans les zones semi-annulaires 8 et 8', qui peuvent être ainsi récupérés sans mélange dans les espaces de collecte du gaz 12 et 12'.
Alternativement et comme indiqué sur la figure 2, le moyen de séparation 34 (indiqué en pointillé) n'est pas nécessairement agencé de sorte à passer par le centre de l'enceinte 2, mais sa position peut être décalée par rapport au centre de manière à séparer l'espace annulaire 30 en deux portions d'anneau de volumes différents.
Selon un autre mode de réalisation représenté à la figure 3, le moyen de séparation comprend deux plaques étanches aux catalyseurs et au gaz traversant l'espace annulaire 30 et de longueur égale au rayon l'enceinte 2. Les plaques de séparation 34 sont solidaires par une extrémité à l'enceinte 2 et l'une à l'autre par leur autre extrémité. Ce mode de réalisation est avantageux car, en fonction de l'angle formé par les moyens de séparation 34 l'un par rapport à l'autre, il est possible de partager l'espace annulaire 30 en des portions d'anneau d'angles différents et donc de volumes différents. Dans l'exemple décrit en référence à la figure 3, l'espace annulaire 30 est divisé en deux zones (ou compartiments) 8 et 8' dont les volumes correspondent respectivement à 3/4 et 1/4 du volume total de l'espace annulaire 30. Comme indiqué sur les figures 1, 2 et 3, la section de combustion CO de chacune des zones de régénération comprend au moins un moyen d'injection de gaz de combustion 17, 17'. Ce mode de réalisation est avantageux car il permet non seulement de réguler les débits de gaz dans les différentes zones de combustion en fonction de la vitesse d'écoulement gravitaire du catalyseur mais également d'employer des gaz de composition différente en fonction de la quantité de coke déposée sur les catalyseurs. En référence aux figures 2 et 3, la section de combustion CO de chacune des zones de régénération comprend en outre au moins un moyen d'évacuation du gaz de combustion 19 et 19'.

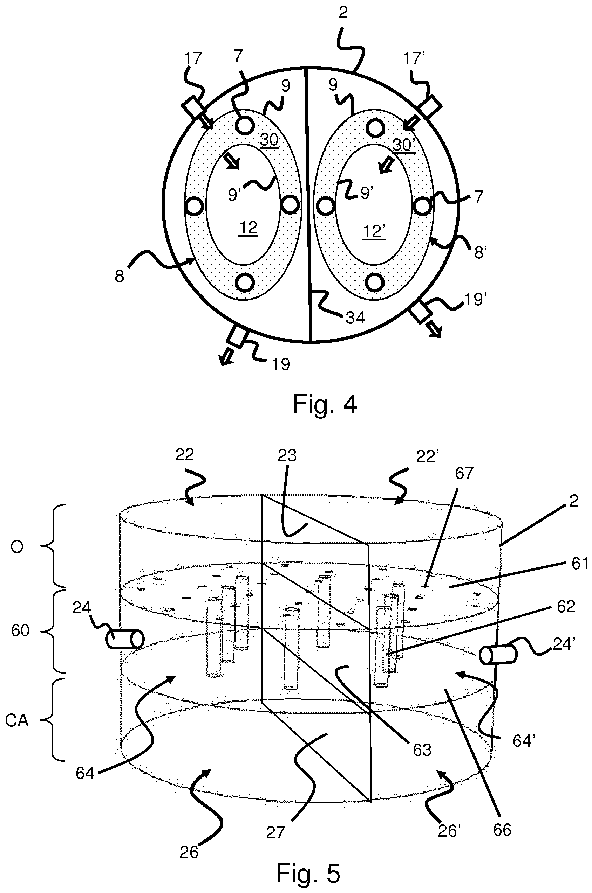

La figure 4 représente un autre mode de réalisation alternatif des sections de combustion CO des zones régénération qui diffère de celui des figures 1 à 3 en ce que chaque zone de combustion CO est totalement indépendante l'une de l'autre. Chaque zone (ou compartiment) de combustion 8 et 8' comprend respectivement un espace annulaire 30 et 30' délimité par deux grilles 9 et 9' de forme cylindrique et disposées de manière concentrique. Chaque espace interne 12, 12' circonscrit par la grille interne 9' sert d'espace de collecte pour le gaz de combustion qui traverse les espaces annulaires 30 et 30'. Les zones (ou compartiments) de combustion 8, 8' sont également équipées d'au moins un moyen d'entrée du catalyseur 7. La section de combustion CO comprend par ailleurs au moins des moyens 17 et 17' d'amenée du gaz de combustion et au moins des moyens d'évacuation de gaz de combustion 19 et 19'. Ce mode de réalisation est avantageux lorsqu'il n'est pas nécessaire d'employer un gaz de combustion de composition différente pour traiter les catalyseurs contenus dans les zones de combustion 8 et 8'. En outre les zones de combustion 8 et 8' sont délimitées par un moyen de séparation 34 étanche au gaz, par exemple une plaque pleine, qui est solidaire à ses deux extrémités à l'enceinte 2. Cette forme de réalisation est avantageuse lorsque que l'on emploie des gaz de combustion de nature différente pour traiter spécifiquement les catalyseurs contenus dans les zones de combustion 8 et 8' ou lorsque que l'on envisage de réaliser la réaction de combustion avec un même gaz de combustion en appliquant des conditions opératoires différentes (température, débit du gaz de combustion) dans les deux zones de combustion 8 et 8'.

En référence à la figure 1, l'espace situé entre la grille externe 9 et l'enceinte 2 est obturé à son extrémité inférieure par une plaque 11. L'espace central circonscrit par la grille interne 9' est éventuellement obturé à son extrémité supérieure par une plaque 13 étanche au gaz. Les catalyseurs contenus dans les zones (ou compartiments) 8 et 8' sont respectivement transférés par gravité dans des zones (ou compartiments) 14 et 14' de combustion de l'étage Z2 via les conduits d'alimentation 15 et 15'. Les zones (ou compartiments) 14 et 14' sont de préférence conçues de la même manière que les zones (ou compartiments) 8 et 8' de l'étage Z1. Dans le mode de réalisation de la figure 1, les zones (ou compartiments) 14 et 14' sont formées par un espace annulaire délimité par deux tamis 16 et 16' perméables au gaz et étanches aux catalyseurs, par exemple des grilles ou deux plaques perforées, de préférence tubulaires cylindriques et disposés de manière concentrique. L'espace annulaire 30 est en outre divisé en deux zones (ou compartiments) semi-annulaires 14 et 14' dont les volumes sont sensiblement égaux, par un moyen de séparation 34 étanche aux catalyseurs et au gaz. En fonctionnement, un flux de gaz de combustion contenant de l'oxygène est introduit dans l'enceinte 2 en tête de l'étage Z1 par les moyens 17 et 17' d'amenée du gaz de combustion. Dans l'étage Z1, le flux de gaz circule selon les flèches indiquées sur la figure 1 en traversant les lits de catalyseur contenus dans les zones (ou compartiments) de combustion 8 et 8'. En effet, les plaques étanches 13 et 11 obligent le gaz de combustion arrivant par l'orifice à passer en périphérie des zones (ou compartiments) 8 et 8' dans les espaces de collecte central 12 et 12' en traversant les lits de catalyseur contenu dans les espaces cylindriques 8 et 8'. Un flux de gaz de combustion contenant de l'oxygène est introduit entre l'étage Z1 et Z2 par le conduit 18. Ce deuxième flux se mélange au premier flux de gaz ayant traversé l'étage Z1. De la même façon pour l'étage Z2, le gaz de combustion traverse les lits de catalyseur contenu les espaces 14 et 14', selon les flèches indiquées sur la figure 1. Après avoir traversé les lits de catalyseur confinés dans les espaces 14 et 14', le gaz de combustion est collecté dans les espaces de collecte et est évacué de l'étage Z2 par les conduits 19 et 19'. Comme indiqué sur la figure 1, dans la configuration où la zone de combustion contient deux étages de combustion Z1 et Z2, le régénérateur comprend en outre un moyen intermédiaire d'évacuation 10 du gaz de combustion agencé entre lesdits étages. Le gaz de combustion soutiré par le moyen intermédiaire d'évacuation 10 est refroidi par un gaz contenant de l'oxygène frais et ensuite réintroduit dans le régénérateur via le conduit 18.
Selon un autre mode de réalisation, la section de combustion CO peut être arrangée de manière à ce que le gaz de combustion circule de l'intérieur vers l'extérieur à travers les zones (ou compartiments) 8, 8', 14 et 14'. Alternativement, les sections de combustion CO peuvent être arrangées de manière à ce que le mouvement du gaz soit injecté en fond desdites sections et soit évacué en tête desdites sections.
Etant donné que les zones de combustion sont isolées les unes des autres par un moyen de séparation étanche au gaz, on peut appliquer des conditions opératoires différentes pour réaliser la combustion du coke en fonction de la quantité de coke déposée sur les catalyseurs circulant dans les zones de combustion.
En référence à la figure 1, les catalyseurs des zones (ou compartiments) de combustion 14 et 14' de l'étage Z2 s'écoulent dans les sections d'oxychloration O via les conduits 20 et 20'. Une plaque 21 étanche au gaz est avantageusement disposée entre les sections combustion et d'oxychloration O pour éviter la circulation de gaz entre ces deux sections.

Les sections d'oxychloration O des zones de régénération ont pour fonction de recharger les grains de catalyseur en chlore et re-disperser le métal actif à sa surface afin d'améliorer la répartition dudit métal dans les grains de catalyseur. Dans chaque section d'oxychloration O, les catalyseurs s'écoulent dans des zones (ou compartiments) respectifs 22 et 22' internes au réacteur. Les zones (ou compartiments) 22 et 22' sont séparés par un moyen de séparation 23 étanche aux catalyseurs et au gaz formant ainsi deux compartiments d'oxychloration indépendants pour traiter séparément et dans des conditions opératoires différentes (par exemple avec des vitesses d'écoulement du catalyseur différentes ou des débits de gaz réactif différents ou des températures différentes, encore avec des compositions de gaz différents) les catalyseurs. Comme représenté à la figure 1, le fond de chaque compartiment d'oxychloration 22 et 22' est muni d'au moins un conduit 24 et 24' qui permet d'injecter le gaz d'oxychloration dans les compartiments d'oxychloration 22 et 22' respectivement. De façon alternative, le réacteur peut comprendre un moyen d'injection de gaz commun aux compartiments 22 et 22' permettant d'introduire le gaz d'oxychloration. Le gaz d'oxychloration comporte un composé chloré et peut être à une température comprise entre 350°C et 550°C, de préférence entre 460°C et 530°C. En tête de chacun des compartiments d'oxychloration 22 et 22' est agencé au moins un conduit 25 permettant d'évacuer le gaz d'oxychloration des sections d'oxychloration O. Le gaz d'oxychloration injecté par les conduits 24 et 24' circule selon une direction ascendante à travers les compartiments d'oxychloration 22 et 22' à contre-courant de l'écoulement gravitaire des grains de catalyseur et est évacué de l'enceinte 2 par le conduit 25. Il est à souligner que les gaz d'oxychloration qui sont introduits par les conduits 24 et 24' peuvent être de même composition ou de composition différente ainsi que leur débits.
Les catalyseurs arrivant en fond des compartiments d'oxychloration 22 et 22' continuent de s'écouler dans les sections de calcination CA respectives qui comprennent également un compartiment de calcination 26, 26'. Les compartiments de calcination 26 et 26' sont séparés l'un de l'autre par un moyen de séparation 27 étanche aux catalyseurs et au gaz de sorte que l'on peut traiter les catalyseurs dans chaque compartiment dans des conditions opératoires différentes (vitesses d'écoulement du catalyseur différentes ou des débits de gaz réactif différents ou de températures différentes, encore avec des compositions de gaz différents). La section de calcination CA a notamment pour but de sécher les grains de catalyseur. Les compartiments de calcination 26 et 26' de la section de calcination CA sont munis de conduits 28 et 28' permettant d'injecter un gaz de calcination. Le gaz de calcination est généralement de l'air ou de l'air appauvri en oxygène et peut être à une température comprise entre 400°C et 550°C. Les gaz de calcination qui sont introduits par les conduits 28 et 28' peuvent être de même composition ou de composition différente.
Afin de distribuer de manière homogène le gaz de calcination dans le lit de catalyseur des compartiments 26 et 26', les conduits 28 et 28' peuvent déboucher respectivement dans un espace 29 et 29' disposé en périphérie de l'enceinte 2. Les espaces 29 et 29' sont ouverts dans leur partie basse située en fond des compartiments de la section de calcination CA de sorte que le gaz injecté par les conduits 28 et 28' soit distribué dans les lits de catalyseur sur toute la périphérie depuis le fond des compartiments 26 et 26'. Le gaz de calcination injecté circule ainsi selon une direction ascendante, à contre-courant de l'écoulement gravitaire du catalyseur, à travers les compartiments 26 et 26' puis à travers les compartiments 22 et 22' en se mélangeant avec le gaz d'oxychloration et est évacué de l'enceinte 2 par le conduit 25. Alternativement, le gaz de calcination peut être directement évacué des compartiments de calcination 26 et 26' sans rencontrer la section d'oxychloration. Alternativement, le gaz de calcination sortant de chacune des zones peut être remélangé avant d'être redistribué dans chacune des zones (ou compartiments) d'oxychloration 22 et 22'.
On peut également prévoir une section de mélange entre la section d'oxychloration et la section de calcination. La section de mélange comporte par exemple un plateau distributeur conçu afin d'effectuer un mélange homogène du gaz de calcination avec le gaz d'oxychloration et de distribuer de manière homogène le mélange de gaz.
La figure 5 est une vue en perspective détaillée de la section de mélange agencée entre les sections d'oxychloration O et de calcination du régénérateur selon l'invention.
En référence à la figure 5, la section de mélange 60 est positionnée entre le fond des sections d'oxychloration O et le sommet des sections de calcination CA. La section de mélange 60 est recouverte par un plateau 61. Le plateau 61 est une plaque ne laissant pas passer les grains de catalyseur. Par exemple le plateau 61 est un disque plein de section égale à la section de l'enceinte 2. Alternativement, le plateau 61 peut être ondulé, par exemple en formant des cônes ou des entonnoirs autour des tubes 62 décrits ci-après.
Le plateau 61 est traversé par plusieurs tubes 62 qui permettent l'écoulement des grains de catalyseur depuis la section d'oxychloration O jusque dans la section de calcination CA. Les tubes 62 s'étendent sous le plateau 61 sur une hauteur H. Le nombre, la position, la section et/ou la hauteur H des tubes 62 sont déterminés pour assurer le passage du débit de catalyseur entre les section d'oxychloration O et de calcination CA. La section de mélange 60 est en outre divisée en deux espaces ou compartiments 64 et 64' par un moyen de séparation 63, par exemple une plaque 63, étanche au gaz et qui s'étend sur la hauteur H de ladite section de mélange 60. Comme indiqué sur la figure 5, le moyen de séparation 63 est positionné au droit des moyens de séparation 23 et 27 qui séparent respectivement les sections d'oxychloration O et de calcination CA en deux compartiments.
Le plateau 61 associé aux tubes 62 et à la plaque 63 permet de délimiter deux espaces de mélange 64 et 64'. Les espaces de mélange 64 et 64' s'étendent sur la hauteur H des tubes 62. En effet, le plateau 61 associé aux tubes 62 permet d'éviter la présence de catalyseur dans les espaces de mélange 64 et 64' sous le plateau 61 sur la hauteur H. Les tubes 62 peuvent être sensiblement verticaux. Par exemple, les axes des tubes 62 forment un angle compris entre 0° et 15° par rapport à la direction verticale. Les conduits 24 et 24' débouchant à travers l'enceinte 2 dans les compartiments 64 et 64' de la section de mélange 60 permettent d'introduire le gaz d'oxychloration dans lesdits compartiments 64 et 64'. La partie inférieure des compartiments 64 et 64' autorise le passage de gaz. Par exemple la partie inférieure est ouverte. Ainsi, le gaz de calcination circulant selon une direction verticale ascendante dans les compartiments 26 et 26' de la section de calcination CA débouche dans la section de mélange 60 de manière à réaliser le mélange du gaz de calcination avec le gaz d'oxychloration dans la section de mélange 60 qui est exempt de grain de catalyseur, ce qui permet d'obtenir un bon mélange des gaz. De plus, les conduits 24 et 24' peuvent constituer une arrivée latérale de gaz dans la section mélange 60, c'est-à-dire que les conduits 24 et 24' peuvent être horizontaux et traversent l'enceinte 2. Le fait d'injecter le gaz d'oxychloration de manière latérale par les conduits horizontaux 24 et 24' améliore encore le mélange avec le gaz de calcination circulant en courant croisé par rapport au gaz d'oxychloration injecté horizontalement par les conduits 24 et 24'. Alternativement, on peut disposer une plaque 66 perméable au gaz sur la surface inférieure de la section de mélange 60. La plaque 66, par exemple une grille ou une plaque perforée, autorise le passage de gaz de calcination de la section de calcination dans la section de mélange 60. Dans ce cas figure, les tubes 62 traversent la plaque 66 pour créer un passage des grains de catalyseurs communiquant entre les sections d'oxychloration O et de calcination CA. La grille ou plaque perforée permet d'introduire le gaz de calcination à grande vitesse sans entrainer des particules de solide du lit de catalyseur de la section de calcination dans la section de mélange. De plus, la plaque 66 peut renforcer la tenue mécanique du plateau 61 en solidarisant les tubes 62, d'une part, à la plaque 66 et d'autre part, au plateau 61.
Comme monté sur la figure 5, le plateau 61 comporte une pluralité d'orifices 67 qui permettent le passage du mélange de gaz depuis la section de mélange 60 dans la section d'oxychloration O. Les orifices sont dimensionnés pour autoriser le passage de gaz tout en évitant le passage de grains de catalyseur. La multiplication des points d'injection de gaz par les orifices 67 sur la section du réacteur permet une excellente distribution du mélange de gaz sur toute la section du réacteur. Par exemple, les orifices 67 peuvent être munis d'un dispositif couramment nommé "bubble cap" ou tout autre système autorisant le passage du gaz et mais pas des grains de catalyseur.
De manière alternative, il est possible d'utiliser une solution du type caisson de mélange du document FR 2993794.

Dans le cadre de l'invention, le régénérateur peut bien entendu comprendre plus de deux zones de régénération permettant ainsi de régénérer séparément dans chacune desdites zones un catalyseur dans des conditions opératoires différentes choisies en fonction du taux de désactivation du catalyseur et en particulier en fonction du taux de cokage.
Toujours dans le cadre de l'invention, les catalyseurs qui sont régénérés respectivement dans chaque zone de régénération peuvent être de composition différente en termes de nature du support et de la phase métallique active.

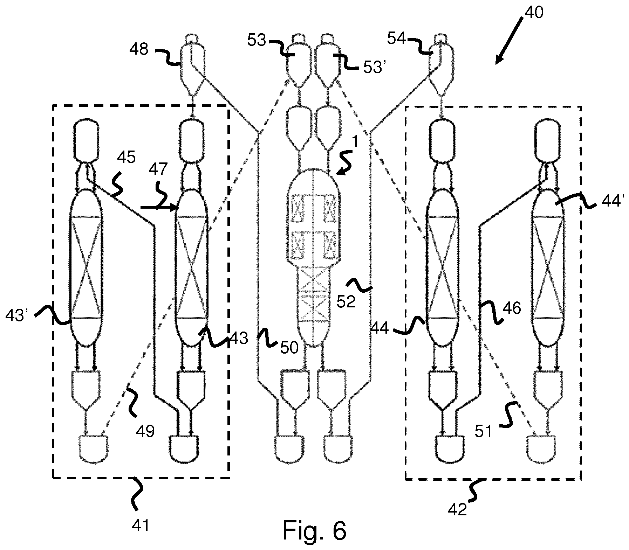

Un procédé de reformage catalytique mettant en œuvre un régénérateur selon l'invention est décrit ci-après en référence à la figure 6. Le procédé de la figure 6 est dit "en régénération continue du catalyseur" (CCR, Continuous Catalytic Reforming selon la terminologie anglo-saxonne) qui implique que la réaction est conduite dans des sections réactionnelles dans lesquelles le catalyseur s'écoule continuellement de haut en bas et la régénération se fait en continu dans un réacteur annexe et le catalyseur est recyclé dans les sections réactionnelles de manière à ne pas interrompre la réaction.
L'unité de reformage 40 comprend au moins une première et une seconde sections réactionnelles 41 et 42. Dans la figure 6, chaque section réactionnelle 41 et 42 est composée de deux réacteurs à lit mobile de catalyseur en série agencés côte-à-côte. Plus précisément la première section réactionnelle 41 comprend deux réacteurs de reformage à lit mobile 43 et 43', des moyens de transfert (non représentés sur la figure 6) de l'effluent issu fond du réacteur 43 vers la tête du réacteur 43', des moyens de transfert (non représentés sur la figure 6) de l'effluent issu fond du réacteur 43' vers la seconde section réactionnelle 42 et des moyens de transfert 45 du catalyseur collecté en fond du réacteur 43 vers le sommet du réacteur 43'.
De même, la seconde section réactionnelle 42 comprend deux réacteurs de reformage à lit mobile 44 et 44', des moyens de transfert (non représentés sur la figure 6) de l'effluent issu fond du réacteur 44 vers la tête du réacteur 44' et des moyens de transfert 46 du catalyseur collecté en fond du réacteur 44 vers le sommet du réacteur 44'.
Conformément à l'invention, la première section réactionnelle 41 peut mettre en œuvre un catalyseur spécifique de composition différente de celle du catalyseur utilisé dans la seconde section réactionnelle 42.
Chacune des sections réactionnelles 41 et 42 comporte également des moyens de transfert 49 et 51 du catalyseur collecté en sortie du dernier réacteur de chacune des sections réactionnelles vers un régénérateur 1 selon l'invention qui est apte à régénérer en même temps et séparément les catalyseurs employés dans les sections réactionnelles.
Dans la première section réactionnelle 41 a lieu principalement la réaction de déshydrogénation des composés naphténiques en aromatiques tandis que dans la seconde section réactionnelles se déroulent principalement les réactions de déshydrocyclisation des n-paraffines en aromatiques, d'hydrocraquage des paraffines et des composés naphténiques en composés hydrocarbures saturés à courtes chaines (C3, C4) et de formation de coke qui est le principal facteur de désactivation du catalyseur. On comprend bien ainsi que les catalyseurs qui sont extraits de la première zone réactionnelle 41 présente un taux de désactivation plus faible que ceux de la seconde zone réactionnelle 42. Par conséquent, il est avantageux de mettre en œuvre des conditions opératoires de régénération moins sévères pour rétablir l'activité des catalyseurs de la première zone réactionnelle 41 que pour les catalyseurs issus de la seconde zone réactionnelle 42.
Comme indiqué à la figure 6, une charge d'hydrocarbures contenant des composés paraffiniques et des naphtènes, préalablement chauffée est envoyée par la ligne 47 avec de l'hydrogène en tête du réacteur 43 de la première section réactionnelle 41. Le catalyseur stocké dans une trémie supérieure 48 est introduit en tête du réacteur 43 d'où il s'écoule par gravité et en sort par le fond. La charge d'hydrocarbures est ainsi mise en contact avec le catalyseur du lit mobile afin de produire un premier effluent réactionnel qui est soutiré en fond du premier réacteur 43. Le catalyseur et le premier effluent éventuellement réchauffé issus du premier réacteur 43 sont ensuite envoyés en tête du second réacteur 43' dans lequel ils circulent suivant un mouvement descendant. Le premier effluent est ainsi remis en contact avec le catalyseur afin de produire un second effluent qui est soutiré en sortie du fond dudit second réacteur 43'. Quant au catalyseur qui est récupéré au fond du second réacteur 43', il est envoyé dans une trémie de stockage 53 en tête du régénérateur 1 par un moyen de transfert 49, par exemple un dispositif de lift. Le premier catalyseur est ensuite régénéré dans le régénérateur 1 d'où il est soutiré et renvoyé par la ligne 50 dans la trémie 48 située au-dessus du premier réacteur 43.
Le second effluent issu du second réacteur 43' de la première section réactionnelle 41 est envoyé en tête du premier réacteur 44 de la seconde section réactionnelle 42 dans lequel il est mis en contact avec du catalyseur contenu dans un lit mobile à écoulement gravitaire afin de produire un troisième effluent. Le troisième effluent soutiré en fond du réacteur 44 est renvoyé en tête du second réacteur 44' de la seconde section réactionnelle 42 par le moyen de transfert (non indiqué sur la figure 6). Le catalyseur collecté en sortie du fond du réacteur 44 est acheminé en tête du réacteur 44' par le moyen de transfert 46 (par exemple un lift) et est mis en contact avec le troisième effluent afin de produire un reformat qui est soutiré en fond du second réacteur 44' de la seconde section réactionnelle 42. Le catalyseur qui s'écoule par gravité du réacteur 44' est chargé au moyen de la ligne 51 dans une trémie 53' située en tête du régénérateur 1. Le catalyseur collecté en sortie de la seconde zone réactionnelle 42 est régénéré dans le régénérateur 1 puis envoyé, via la ligne 52, dans une trémie 54 agencée au-dessus du premier réacteur 44 de la seconde section réactionnelle 42. Les trémies 53 et 53' de stockage des catalyseurs usés peuvent être remplacées par une trémie unique comportant deux compartiments de stockage séparés par une paroi étanche aux catalyseurs. De la même manière les trémies de stockage 48 et 54 des catalyseurs régénérés peuvent être substituées par une trémie unique avec des compartiments séparés par une paroi étanche aux catalyseurs.
Selon un mode de réalisation alternatif, le procédé selon l'invention met en œuvre dans chaque section réactionnelle un réacteur dans lequel les lits mobiles catalytiques sont empilés verticalement.
Selon une autre alternative, il est également possible de disposer les première et seconde zones réactionnelles dans une configuration verticale dans un réacteur avec la première zone réactionnelle 41 qui est située au-dessus de la seconde zone réactionnelle 42.
De préférence, le ou les lits mobiles des zones réactionnelle sont du type lit mobile radial dans lequel la charge d'hydrocarbures circule à travers le lit catalytique suivant un écoulement radial depuis la périphérie extérieure du lit vers le centre du réacteur qui comprend un collecteur central d'effluent.

A titre d'exemple, les sections réactionnelles sont opérées dans les conditions opératoires suivantes:
- une température moyenne d'entrée dans la section réactionnelle comprise entre 470 et 570°C;
- une pression comprise entre 0,3 et 1,5 MPa;
- un rapport (débit massique de charge / quantité massique de catalyseur) compris entre 1 et 10 h⁻¹;
- un rapport molaire H₂/hydrocarbures compris entre 0,8 et 8;

Dans le cadre de l'invention le procédé peut comprendre plus de deux sections réactionnelles qui opèrent chacune avec des catalyseurs de composition identique ou différente. Par exemple le procédé peut mettre en œuvre trois ou quatre sections réactionnelles en série.
Le procédé exemplifié dans la figure 6 met en jeu deux lits mobiles de catalyseur par section réactionnelle. Cependant, il est bien entendu possible d'employer un ou plusieurs lits mobiles de catalyseur par section réactionnelle.

La charge d'hydrocarbures est généralement une coupe d'hydrocarbures du type naphta riche en composés paraffiniques et naphténiques et relativement pauvre en composés hydrocarbures aromatiques. La charge a de préférence un intervalle de distillation compris entre 50°C et 250°C. Une charge naphta qui peut être traitée par le procédé est par exemple issue de la distillation atmosphérique de brut de pétrole ou un condensat de gaz naturel. Le procédé selon l'invention s'applique également à des naphtas lourds produits par une unité de craquage catalytique (FCC), de cokéfaction, d'hydrocraquage ou encore à de l'essence de vapocraquage.

## Revendications

1. Régénérateur de catalyseur en lit mobile (1) pour régénérer simultanément et séparément des catalyseurs dans des conditions opératoires différentes, comprenant une enceinte (2) s'étendant selon une direction verticale, ladite enceinte étant divisée en au moins deux zones de régénération s'étendant le long de la hauteur verticale de ladite enceinte dans lesquelles circulent de façon gravitaire des particules de catalyseur, dans lequel chaque zone de régénération comprend successivement et dans l'ordre de circulation des catalyseurs:
a) une section de combustion (CO);
b) une section d'oxychloration (O) disposée sous la section de combustion et comportant des moyens d'amenée du catalyseur de la section de combustion (CO) dans la section d'oxychloration (O);
c) une section de calcination (CA) disposée sous la section d'oxychloration,
**caractérisé en ce que** les zones de régénération sont séparées les unes des autres par un moyen de séparation (6, 34, 23, 27) étanche aux catalyseurs et aux gaz de sorte que dans ledit réacteur les catalyseurs de chacune des zones soient aptes à être régénérés dans des conditions opératoires différentes.

2. Régénérateur selon la revendication 1, dans lequel chacune des sections de combustion comprend un espace annulaire délimité par deux tamis perméables au gaz et étanches aux catalyseurs dans lequel circule de manière gravitaire le catalyseur.

3. Régénérateur selon la revendication 1, dans lequel chacune des sections de combustion est formé par une portion d'un espace annulaire (30), l'espace annulaire (30) étant délimité par deux tamis (9, 9') perméables au gaz et étanches aux catalyseurs et divisé en portions par des moyens de séparation (34) étanches aux catalyseurs et au gaz.

4. Régénérateur selon l'une des revendications 2 à 3, dans lequel les tamis sont choisis parmi une grille et une plaque perforée.

5. Régénérateur selon l'une des revendications précédentes, dans lequel chaque section d'oxychloration est obtenue par la partition d'une zone de l'enceinte (2) en compartiment (22, 22') par un moyen de séparation (23) étanche aux catalyseurs et au gaz.

6. Régénérateur selon l'une des revendications précédentes, dans lequel chaque section de calcination est obtenue par la partition d'une zone de l'enceinte (2) en compartiment (26, 26') par un moyen de séparation (27) étanche aux catalyseurs et au gaz.

7. Régénérateur selon l'une des revendications précédentes, dans lequel la section d'oxychloration est séparée de la section de calcination par une section de mélange configurée pour réaliser le mélange du gaz d'oxychloration avec du gaz de calcination.

8. Unité de reformage catalytique (40) à régénération continue de catalyseur comprenant :
• au moins une première zone réactionnelle (41) et au moins une seconde zone réactionnelle (42), les première et seconde zones réactionnelles contenant respectivement au moins un premier lit mobile de catalyseur et au moins un second lit mobile de catalyseur;
• un régénérateur (1) selon l'une des revendications précédentes apte à régénérer simultanément et séparément les catalyseurs des première et seconde zones réactionnelles (41,42) dans des conditions opératoires différentes;
• des moyens de transfert de l'effluent issu de la première zone réactionnelle (41) dans la seconde zone réactionnelle (42);
• des moyens d'amenée (49) du catalyseur de la première zone réactionnelle (41) dans le régénérateur (1);
• des moyens d'amenée (51) du catalyseur de la seconde zone réactionnelle (42) dans le régénérateur (1);
• des moyens de transfert (50) du catalyseur régénéré depuis le régénérateur (1) dans la première zone réactionnelle (41);
• des moyens de transfert (52) du catalyseur régénéré depuis le régénérateur (1) dans la seconde zone réactionnelle (42).

9. Unité de reformage catalytique (40) selon la revendication 8, dans laquelle les première et seconde zones réactionnelles (41, 42) sont disposées en empilement vertical dans un réacteur.

10. Unité de reformage catalytique (40) selon la revendication 8, dans laquelle les première et seconde zones réactionnelles (41, 42) sont disposées respectivement dans au moins un premier réacteur et au moins un second réacteur qui sont agencés côte-à-côte.

11. Unité de reformage catalytique (40) selon l'une des revendications 8 à 10, dans laquelle le catalyseur de la première zone réactionnelle (41) est de composition différente de celle du catalyseur de la seconde zone réactionnelle (42).

12. Procédé de reformage catalytique d'une charge d'hydrocarbures comprenant les étapes suivantes:
a) on traite la charge d'hydrocarbures en présence d'hydrogène dans au moins une première zone réactionnelle (41) comportant au moins un lit mobile de catalyseur ;
b) on soutire en continu et séparément un effluent et le catalyseur de la première zone réactionnelle (41);
c) on traite l'effluent issu de la première zone réactionnelle (41) en présence d'hydrogène dans au moins une seconde zone réactionnelle (42) comportant au moins un lit mobile de catalyseur;
d) on soutire en continu et séparément un reformat et le catalyseur de la seconde zone réactionnelle (42);
e) on envoie les catalyseurs des première et seconde zones réactionnelles dans un régénérateur (1) selon l'une des revendications 1 à 7 et on régénère dans des conditions opératoires différentes lesdits catalyseurs;
f) on renvoie séparément les catalyseurs régénérés dans les première et seconde zones réactionnelles (41, 42) respectives.

13. Procédé selon la revendication 12, dans lequel le catalyseur de la première zone réactionnelle (41) est de composition différente de celle du catalyseur de la seconde zone réactionnelle (42).

14. Procédé selon les revendications 12 ou 13, dans lequel les écoulements de la charge, des effluents, des catalyseurs se font à co-courant selon une direction descendante.

15. Procédé selon l'une des revendications 12 à 14, dans lequel les première et seconde zones réactionnelles (41, 42) sont disposées dans une configuration verticale dans un réacteur avec la première zone réactionnelle (41) qui est située au-dessus de la seconde zone réactionnelle (42).

16. Procédé selon l'une des revendications 12 à 14, dans lequel les première et seconde zones réactionnelles (41, 42) sont disposées côte-à-côte respectivement dans au moins un premier réacteur et au moins un second réacteur.

## Patentansprüche

1. Im Bewegtbett-Verfahren arbeitender Katalysator-Regenerator (1) zum gleichzeitigen und getrennten Regenerieren von Katalysatoren unter unterschiedlichen Betriebsbedingungen, welcher einen sich in einer vertikalen Richtung erstreckenden Behälter (2) umfasst, wobei der Behälter in wenigstens zwei sich entlang der vertikalen Höhe des Behälters erstreckende Regenerationsbereiche aufgeteilt ist, in denen unter Schwerkraftwirkung Katalysatorpartikel zirkulieren, wobei jeder Regenerationsbereich nacheinander und in der Reihenfolge der Zirkulation der Katalysatoren umfasst:
a) einen Verbrennungsabschnitt (CO);
b) einen Oxychlorierungsabschnitt (O), der unter dem Verbrennungsabschnitt angeordnet ist und Mittel zur Zuführung des Katalysators aus dem Verbrennungsabschnitt (CO) in den Oxychlorierungsabschnitt (O) aufweist;
c) einen Kalzinierungsabschnitt (CA), der unter dem Oxychlorierungsabschnitt angeordnet ist,
**dadurch gekennzeichnet, dass** die Regenerationsbereiche durch ein Trennmittel (6, 34, 23, 27) voneinander getrennt sind, das dicht gegenüber den Katalysatoren und den Gasen ist, so dass in dem Reaktor die Katalysatoren jedes der Bereiche unter unterschiedlichen Betriebsbedingungen regenerierbar sind.

2. Regenerator nach Anspruche 1, wobei jeder der Verbrennungsabschnitte einen von zwei gasdurchlässigen und gegenüber den Katalysatoren dichten Sieben begrenzten Ringraum umfasst, in welchem der Katalysator unter Schwerkraftwirkung zirkuliert.

3. Regenerator nach Anspruch 1, wobei jeder der Verbrennungsabschnitte von einem Teilabschnitt eines Ringraums (30) gebildet wird, wobei der Ringraum (30) von zwei gasdurchlässigen und gegenüber den Katalysatoren dichten Sieben (9, 9') begrenzt wird und durch gegenüber den Katalysatoren und dem Gas dichte Trennmittel (34) in Teilabschnitte aufgeteilt wird.

4. Regenerator nach einem der Ansprüche 2 bis 3, wobei die Siebe aus einem Gitter und einer perforierten Platte ausgewählt sind.

5. Regenerator nach einem der vorhergehenden Ansprüche, wobei jeder Oxychlorierungsabschnitt durch die Aufteilung eines Bereichs des Behälters (2) in Teilbereiche (22, 22') durch ein gegenüber den Katalysatoren und dem Gas dichtes Trennmittel (23) erhalten wird.

6. Regenerator nach einem der vorhergehenden Ansprüche, wobei jeder Kalzinierungsabschnitt durch die Aufteilung eines Bereichs des Behälters (2) in Teilbereiche (26, 26') durch ein gegenüber den Katalysatoren und dem Gas dichtes Trennmittel (27) erhalten wird.

7. Regenerator nach einem der vorhergehenden Ansprüche, wobei der Oxychlorierungsabschnitt von dem Kalzinierungsabschnitt durch einen Mischabschnitt getrennt ist, der dafür ausgelegt ist, das Gemisch des Oxychlorierungsgases mit Kalzinierungsgas herzustellen.

8. Katalytische Reformiereinheit (40) mit kontinuierlicher Regeneration von Katalysator, welche umfasst:
• wenigstens einen ersten Reaktionsbereich (41) und wenigstens einen zweiten Reaktionsbereich (42), wobei der erste und der zweite Reaktionsbereich jeweils ein erstes Katalysator-Bewegtbett und wenigstens ein zweites Katalysator-Bewegtbett enthalten;
• einen Regenerator (1) nach einem der vorhergehenden Ansprüche, der geeignet ist, gleichzeitig und getrennt die Katalysatoren des ersten und zweiten Reaktionsbereichs (41, 42) unter unterschiedlichen Betriebsbedingungen zu regenerieren;
• Mittel zur Überleitung des vom ersten Reaktionsbereich (41) stammenden Abflusses in den zweiten Reaktionsbereich (42);
• Mittel zur Zuführung (49) des Katalysators des ersten Reaktionsbereichs (41) in den Regenerator (1);
• Mittel zur Zuführung (51) des Katalysators des zweiten Reaktionsbereichs (42) in den Regenerator (1);
• Mittel zur Überleitung (50) des regenerierten Katalysators vom Regenerator (1) in den ersten Reaktionsbereich (41);
• Mittel zur Überleitung (52) des regenerierten Katalysators vom Regenerator (1) in den zweiten Reaktionsbereich (42).

9. Katalytische Reformiereinheit (40) nach Anspruch 8, wobei der erste und der zweite Reaktionsbereich (41, 42) in einem vertikalen Stapel in einem Reaktor angeordnet sind.

10. Katalytische Reformiereinheit (40) nach Anspruch 8, wobei der erste und der zweite Reaktionsbereich (41, 42) in wenigstens einem ersten Reaktor bzw. wenigstens einem zweiten Reaktor angeordnet sind, welche nebeneinander angeordnet sind.

11. Katalytische Reformiereinheit (40) nach einem der Ansprüche 8 bis 10, wobei der Katalysator des ersten Reaktionsbereichs (41) eine Zusammensetzung aufweist, die von derjenigen des Katalysators des zweiten Reaktionsbereichs (42) verschieden ist.

12. Verfahren zum katalytischen Reforming einer Kohlenwasserstoffcharge, welches die folgenden Schritte umfasst:
a) Die Kohlenwasserstoffcharge wird in Gegenwart von Wasserstoff in wenigstens einem ersten Reaktionsbereich (41) behandelt, der wenigstens ein Katalysator-Bewegtbett umfasst;
b) ein Abfluss und der Katalysator werden kontinuierlich und getrennt aus dem ersten Reaktionsbereich (41) abgezogen;
c) der Abfluss aus dem ersten Reaktionsbereich (41) wird in Gegenwart von Wasserstoff in wenigstens einem zweiten Reaktionsbereich (42) behandelt, der wenigstens ein Katalysator-Bewegtbett umfasst;
d) ein Reformat und der Katalysator werden kontinuierlich und getrennt aus dem zweiten Reaktionsbereich (42) abgezogen;
e) die Katalysatoren des ersten und zweiten Reaktionsbereichs werden einem Regenerator (1) nach einem der Ansprüche 1 bis 7 zugeführt, und die Katalysatoren werden unter unterschiedlichen Betriebsbedingungen regeneriert;
f) die regenerierten Katalysatoren werden getrennt wieder dem ersten bzw. zweiten Reaktionsbereich (41, 42) zugeführt.

13. Verfahren nach Anspruch 12, wobei der Katalysator des ersten Reaktionsbereichs (41) eine Zusammensetzung aufweist, die von derjenigen des Katalysators des zweiten Reaktionsbereichs (42) verschieden ist.

14. Verfahren nach den Ansprüchen 12 oder 13, wobei die Strömungen der Charge, der Abflüsse und der Katalysatoren im Gleichstrom in einer Abwärtsrichtung erfolgen.

15. Verfahren nach einem der Ansprüche 12 bis 14, wobei der erste und der zweite Reaktionsbereich (41, 42) in einer vertikalen Konfiguration in einem Reaktor angeordnet sind, wobei sich der erste Reaktionsbereich (41) oberhalb des zweiten Reaktionsbereichs (42) befindet.

16. Verfahren nach einem der Ansprüche 12 bis 14, wobei der erste und der zweite Reaktionsbereich (41, 42) nebeneinander in wenigstens einem ersten Reaktor bzw. wenigstens einem zweiten Reaktor angeordnet sind.

## Claims

1. A moving bed catalyst regenerator (1) for simultaneously and separately regenerating catalysts under different operating conditions, comprising a vessel (2) extending in a vertical direction, said vessel being divided into at least two regeneration zones extending along the vertical height of said vessel, in which particles of catalyst move under gravity, in which each regeneration zone comprises, in succession and in the order in which the catalysts move:
a) a combustion section (CO);
b) an oxychlorination section (O) disposed below the combustion section and comprising means for bringing catalyst from the combustion section (CO) to the oxychlorination section (O);
c) a calcining section (CA) disposed below the oxychlorination section;
**characterized in that** the regeneration zones are separated from each other by a separation means (6, 34, 23, 27) which is impermeable to catalysts and to gases in a manner such that, in said reactor, the catalysts of each of the zones are capable of being regenerated under different operating conditions.

2. The regenerator according to claim 1, in which each of the combustion sections comprises an annular space defined by two sieves which are permeable to gas and impermeable to catalysts in which the catalyst moves under gravity.

3. The regenerator according to claim 1, in which each of the combustion sections is formed by a portion of an annular space (30), the annular space (30) being defined by two sieves (9, 9') which are permeable to gas and impermeable to catalysts and divided into portions by separation means (34) which are impermeable to catalysts and to gas.

4. The regenerator according to either of claims 2 and 3, in which the sieves are selected from a screen and a perforated plate.

5. The regenerator according to one of the preceding claims, in which each oxychlorination section is obtained by partitioning a zone of the vessel (2) into compartments (22, 22') by a separation means (23) which is impermeable to catalysts and to gas.

6. The regenerator according to one of the preceding claims, in which each calcining section is obtained by partitioning a zone of the vessel (2) into compartments (26, 26') by a separation means (27) which is impermeable to catalysts and to gas.

7. The regenerator according to one of the preceding claims, in which the oxychlorination section is separated from the calcining section by a mixing section which is configured to carry out mixing of oxychlorination gas with calcining gas.

8. A catalytic reforming unit (40) with continuous regeneration of catalyst, comprising:
• at least a first reaction zone (41) and at least a second reaction zone (42), the first and second reaction zones respectively containing at least a first moving bed of catalyst and at least a second moving bed of catalyst;
• a regenerator (1) according to one of the preceding claims, which is capable of simultaneously and separately regenerating the catalysts of the first and second reaction zones (41, 42) under different operating conditions;
• means for transferring the effluent obtained from the first reaction zone (41) to the second reaction zone (42) ;
• means (49) for bringing catalyst from the first reaction zone (41) to the regenerator (1);
• means (51) for bringing catalyst from the second reaction zone (42) to the regenerator (1);
• means (50) for transferring regenerated catalyst from the regenerator (1) to the first reaction zone (41) ;
• means (52) for transferring regenerated catalyst from the regenerator (1) to the second reaction zone (42) .

9. The catalytic reforming unit (40) according to claim 8, in which the first and second reaction zones (41, 42) are disposed in a vertical stack in a reactor.

10. The catalytic reforming unit (40) according to claim 8, in which the first and second reaction zones (41, 42) are respectively disposed in at least a first reactor and at least a second reactor which are arranged side by side.

11. The catalytic reforming unit (40) according to one of claims 8 to 10, in which the composition of the catalyst of the first reaction zone (41) is different from that of the catalyst of the second reaction zone (42) .

12. A process for catalytic reforming of a hydrocarbon feed, comprising the following steps:
a) treating the hydrocarbon feed in the presence of hydrogen in at least a first reaction zone (41) comprising at least one moving bed of catalyst;
b) continuously and separately withdrawing an effluent and the catalyst from the first reaction zone (41);
c) treating the effluent obtained from the first reaction zone (41) in the presence of hydrogen in at least a second reaction zone (42) comprising at least one moving bed of catalyst;
d) continuously and separately withdrawing a reformate and the catalyst from the second reaction zone (42);
e) sending the catalysts from the first and second reaction zones to a regenerator (1) according to one of claims 1 to 7 and regenerating said catalysts under different operating conditions;
f) separately sending the regenerated catalysts to the respective first and second reaction zones (41, 42).

13. The process according to claim 12, in which the composition of the catalyst for the first reaction zone (41) differs from that of the catalyst for the second reaction zone (42).

14. The process according to claim 12 or 13, in which the flows of the feed, the effluents and the catalysts are as co-currents in a downward direction.

15. The process according to one of claims 12 to 14, in which the first and second reaction zones (41, 42) are disposed in a vertical configuration in a reactor with the first reaction zone (41) being located above the second reaction zone (42).

16. The process according to one of claims 12 to 14, in which the first and second reaction zones (41, 42) are disposed side by side respectively in at least a first reactor and at least a second reactor.
